Europäisches Patentamt

European Patent Office

Office européen des brevets

(11) Veröffentlichungsnummer: **0 671 125 A1**

## (12) EUROPÄISCHE PATENTANMELDUNG

(21) Anmeldenummer: **95103113.7**

(22) Anmeldetag: **04.03.95**

(51) Int. Cl.⁶: **A23F 5/12**

(30) Priorität: **07.03.94 DE 4407552**

(43) Veröffentlichungstag der Anmeldung:
**13.09.95 Patentblatt 95/37**

(84) Benannte Vertragsstaaten:
**AT BE CH DE DK ES FR GB GR IE IT LI LU MC NL PT SE**

(71) Anmelder: **KRÜGER GmbH & CO. KG
Senefelder Strasse 44
D-51469 Bergisch-Gladbach (DE)**

(72) Erfinder: **Krüger, Willibert
Zaunkönigweg 5
D-51467 Bergisch Gladbach (DE)**

(74) Vertreter: **Eggert, Hans-Gunther, Dr.
Räderscheidtstrasse 1
D-50935 Köln (DE)**

(54) **Röstkaffeeagglomerat und seine Herstellung.**

(57) Röstkaffeeagglomerat, erhältlich durch Agglomeration von Röstkaffee und wenigstens einem Agglomerationshilfsmittel in Gegenwart eines wasserenthaltenden Mittels und üblicher Hilfsstoffe, wobei der Anteil an wasserfreiem Agglomerationshilfsmittel, bezogen auf 100 Gew.-Teile Röstkaffee 0,1 bis 70 Gew.-Teile beträgt.

Die vorliegende Erfindung betrifft ein Röstkaffeeagglomerat sowie seine Herstellung.

Es ist bekannt, löslichen Kaffee-Extrakt zu agglomerieren und hierbei aromawirksame Stoffe hinzuzufügen, so Aromen aller Art wie auch Gewürze und Pflanzenextrakte.

Der vorliegenden Erfindung liegt die Aufgabe zugrunde, ein Röstkaffeeagglomerat bereitzustellen.

Weitere Aufgabe ist die Bereitstellung eines Herstellungsverfahrens für dieses Agglomerat.

Diese Aufgabe wird gelöst, indem gemahlener Röstkaffee zusammen mit einem Agglomerierungshilfsmittel in Gegenwart eines wasserenthaltenden Mittels agglomeriert wird.

Mithin betrifft diese Erfindung ein Röstkaffeeagglomerat, erhältlich durch Agglomeration von Röstkaffee und wenigstens einem Agglomerationshilfsmittels in Gegenwart eines wasserenthaltenden Mittels und üblicher Hilfsstoffe, wobei der Anteil an wasserfreiem Agglomerationshilfsmittel, bezogen auf 100 Gew.-Teile Röstkaffee 70 bis 0,1, vorzugsweise 1 bis 20 Gew.-Teile beträgt.

Das erfindungsgemäße Röstkaffeeagglomerat hat den Vorteil, daß bei seiner Herstellung aromaschonende Agglomerationsbedingungen verwandt werden und somit die kaffeeigenen und teilweise leichtflüchtigen Aromen nahezu vollständig erhalten bleiben. Dies bedingt weiterhin, daß das Röstkaffeeagglomerat im Gegensatz zu einem Löskaffeeagglomerat einen natürlicheren Kaffeegeschmack aufweist. Das erfindungsgemäße Röstkaffeeagglomerat hat schließlich den Vorteil der einfachen Zubereitung, d.h. es müssen keine Geschmacksstoffe mehr zugesetzt werden; es ist nur ein Arbeitsgang erforderlich (Convenience-Product).

Bei dem Röstkaffee handelt es sich vorzugsweise um die Rohkaffeeprovenienzen Arabica aus den Produzentenländern Kenia, Tansania, Costa Rica, Guatemala, Honduras, Nicaragua, Mexico, Ecuador, Brasilien, Columbien, Neuguinea, Uganda und Äthiopien, wobei diese Provenienzen (in der Regel 3 bis 7 vorstehender Provenienzen) entweder vor oder nach dem Rösten gemischt werden. Nach der Röstung wird im allgemeinen der üblicherweise 1 % Restfeuchte aufweisende Röstkaffee von ca. 200 °C bis auf maximal 50 % Restfeuchte angefeuchtet, die Bohnen als solche eingesetzt oder unter Inertgas vermahlen. Im Rahmen der Herstellung von Röstkaffeeagglomeraten wird erfindungsgemäß unter Röstkaffee ein Röstkaffee mit einem Restfeuchtegehalt von 0,1 bis 5,0 Gew.%, vorzugsweise 0,3 bis 5,0 Gew.% verstanden.

Die Korngröße der Röstkaffeemahlung liegt im allgemeinen zwischen 50 und 2000 μm, vorzugsweise zwischen 500 und 1500 μm oder 60 bis 100 μm.

Als Agglomerationshilfsmittel wird im allgemeinen ein Hydrokolloid zugesetzt. Dieses Hydrokolloid kann entweder natürlichen Ursprungs sein, auf natürlichen Rohstoffen basieren, die chemisch modifiziert worden sind oder ein synthetisches Hydrokolloid sein, welches als Zusatzstoff in Lebensmitteln zugelassen ist oder auf einer Mischung dieser Bestandteile.

Als Agglomerationshilfsmittel auf natürlicher Basis kommen solche auf Basis von Landpflanzen, von Meerespflanzen oder aus Mikroorganismen in Betracht, die Polysaccharide, Disaccharide oder Monosaccharide enthalten. Beispielhaft sind hier Stärke und Stärkeprodukte, also physikalisch und chemisch modifizierte Stärke(ester/ether), Galaktomannane wie z. B. Guargummi und Johannisbrotkernmehl, Pektinstoffe wie z.B. Apfelpektin, Citruspektin, Exsudat-Gummi wie z.B. Tranganth, Cellulose-Derivate wie z.B. Carboxylmethylcellulose (CMC), O-Methylcellulose, Quittensamen, Leinsamenschleim, Kirschgummi, Salepmannan, Lärchengummi Lichenin aus Isländisch Moos, Tamarillenkernmehl, Konjakumehl, Taragummi und Glucose, Fructose, Saccharose als Hydrokolloid aus Landpflanzen genannt.

Als Hydrokolloid aus Meerespflanzen kommen Alginate, Agar, Carrageenane und Dänischer Agar in Betracht.

Als Hydrokolloid aus Mikroorganismen sind Dextran und Xanthan zu nennen.

Weitere Hydrokolloide auf natürlicher Basis, die Proteine enthalten, sind Gelatine und Proteinhydrolysate, vorzugsweise mit einem Molekulargewicht von unter 10.000.

Auch Hydrokolloide auf synthetischer Basis, wie Polyethylenglykol (PEG), Polyvinylpyrrolidon (PVP), Polyvinylacetat (PVAC) sind physiologisch unbedenklich und können, soweit sie lebensmittelrechtlich zugelassen sind, erfindungsgemäß eingesetzt werden.

Als weiteres Agglomerierungshilfsmittel kann auch löslicher Kaffee-Extrakt (Löskaffee) beispielsweise der Arten flüssiger, sprühgetrockneter und gefriergetrockneter Löskaffee eingesetzt werden. Hierbei liegt die Korngröße im allgemeinen bei 2,5 bis 0,1 mm, vorzugsweise 0,5 bis 0,1 mm.

Bevorzugte Agglomerationshilfsmittel sind Polysaccharide, Hydrokolloide, Pflanzenextrakte. Besonders bevorzugt sind Carboxymethylcellulose, Gelatine, Kaffee-Extrakte.

Die Menge an wasserfreiem Agglomerationshilfsmittel beträgt 0,1 bis 70 Gew.-Teile, bezogen auf 100 Gew.-Teile Röstkaffee. Vorzugsweise werden 0,5 bis 20 Gew.-Teile, besonders bevorzugt 0,5 bis 4 Gew.-Teile Agglomerationshilfsmittel, bezogen auf 100 Gew.-Teile Röstkaffee eingesetzt.

Als wasserenthaltendes Mittel, das während der Agglomeration eingesetzt wird, kommt einerseits Wasserdampf oder eine wasserhaltige Flüssigkeit, wie beispielsweise Wasser oder eine wäßrige Salzlösung, oder Gelatine mit Wasser in Betracht.

Dieses Mittel wird in Kombination mit üblichen Hilfsstoffen eingesetzt. Dies sind beispielsweise die auf Seite 2, Zeilen 21 bis 34 und Seite 3 (komplett) beschriebenen Stoffklassen.

Bevorzugte Hilfsstoffe sind Polysaccharide, Hydrokolloide, Pflanzenextrakte.

Nach einer bevorzugten Ausführungsform der vorliegenden Erfindung enthält das Röstkaffeeagglomerat wenigstens einen aromawirksamen Stoff, also einen Stoff, der geschmackswirksam und darüber hinaus gegebenenfalls auch geruchswirksam ist. Hierbei kann es sich um einen Süßstoff, eine Droge, ein Gewürz, einen Pflanzenextrakt, eine Milchpulverzubereitung, ein Fruchtpulver, ein Kakaopulver oder einen natürlichen, naturidentischen oder synthetischen Aromastoff handeln. Als Süßstoff kommen natürliche süßschmeckende Verbindungen wie beispielsweise Saccharose, Glucose, Fructose, Maltose, Glucose-Sirup sowie halbsynthetische und synthetische Verbindungen wie beispielsweise Saccharin, Cyclamate, Glycyrrhizin, Xylitol, L-Aspartyl-L-phenylalaninmethylester, Dihydrochalkone, Thaumatin, Monnellin und Miraculin in Betracht. Bevorzugt werden Saccharose, Aromen und Milchpulverzubereitungen eingesetzt.

Erfindungsgemäß können als Drogen beispielsweise Balsame, Gummiarten und Harze, synthetische, tierische Drogen eingesetzt werden, vorzugsweise Ingwer, Wacholderbeeren, Ginseng, insbesondere Ingwer.

Als Gewürz werden beispielsweise Salz, Zimt, Curry, Basilikum, Vanille, Nelke, Muskat, Kardamon eingesetzt, vorzugsweise werden Salz, Vanille, Curry oder Zimt eingesetzt.

Als Pflanzenextrakt werden erfindungsgemäß beispielsweise Melisse, Baldrian, Passiflora, Thymiankraut, Kamille und Pfefferminz eingesetzt, insbesondere Pfefferminz, Kamille. Erfindungsgemäß wird als aromawirksamer Stoff weiterhin eine Milchpulverzubereitung, ein Fruchtpulver oder Kakaopulver eingesetzt.

Der erfindungsgemäße Aromastoff kann beispielsweise in Form eines etherischen Öls oder einer Riechstoffverbindung, die gleichzeitig Geschmacksstoff ist, oder in Form eines wäßrigen Extrakts oder Homogenats vorliegen. Als etherisches Öl kommen synthetische und natürliche blausäurefreie Bittermandelöle, Agrumenöle, vorzugsweise Minzöle, Mandelöle, Orangenöle, Anisöle in Betracht. Bevorzugte etherische Öle sind Mandelöle. Als Riechstoffverbindung ist beispielsweise Vanillin, Ethylvanillin, Ethylmaltol, Maltol, Zimtaldehyd, Eugenol, Anethol, $\alpha$-Carvon, 3-cis-Hexenol zu nennen, vorzugsweise wird erfindungsgemäß Vanillin eingesetzt.

Die Menge des Aromastoffs liegt im allgemeinen oberhalb der sensorischen Quelle dieser aromawirksamen Stoffe, bezogen auf 100 Gew.-Teile Röstkaffee. Vorzugsweise liegt die Menge des Aromastoffs bei 0,02 bis 2 Gew.-Teilen, vorzugsweise aber 0,1 bis 0,2 Gew.-Teilen, bezogen auf 100 Gew.-Teile Röstkaffee.

Die vorliegende Erfindung betrifft weiterhin ein Verfahren zur Herstellung von Röstkaffeeagglomerat, welches dadurch gekennzeichnet ist, daß Röstkaffee zusammen mit der angegebenen Menge des Agglomerationshilfsmittels

- zunächst in Gegenwart eines wasserenthaltenden Mittels mikroverkapselt,
- dann einer Aufbauagglomeration und
- schließlich einer Trocknung unterzogen wird.

Nach einer bevorzugten Ausführungsform des erfindungsgemäßen Verfahrens werden der erste und zweite Verfahrensschritt gleichzeitig durchgeführt, folglich wird eine Direktagglomeration durchgeführt.

Vorzugsweise wird wenigstens ein aromawirksamer Stoff im ersten und/oder im zweiten Verfahrensschritt zugeführt.

Im Rahmen des erfindungsgemäßen Verfahrens wird der Röstkaffee als ganze, gebrochene oder gemahlene Bohne, vorzugsweise als gebrochene oder gemahlene Bohne eingesetzt.

Bei dem erfindungsgemäßen Verfahren wird als wasserenthaltendes Mittel Wasserdämpf (Dampf), eine wasserhaltige Flüssigkeit, vorzugsweise eine Salzlösung oder Wasser eingesetzt. Die erfindungsgemäß eingesetzten Verfahren sehen im einzelnen wir folgt aus:

Bei der Agglomeration mittels (Wasser)dämpf wird der Röstkaffee mit den Agglomerationshilfsmitteln gemischt, denen gegebenenfalls aromawirksame Stoffe zugesetzt worden sind. Diese Mischung wird über ein Dosieraggregat auf einen mit Dampf mit einer Temperatur oberhalb von 100 °C durchströmten Siebboden dosiert. Das so behandelte Produkt wird in einem Trockner, wie beispielsweise einem Band-, Fließ- oder Wirbelbetttrockner getrocknet. Bei einem modifizierten Verfahren fällt der vorstehend beschriebene behandelte Röstkaffee im freien Fall durch die Dampfzone auf ein Förderband und gelangt von hier in den Trockner.

Bei der Agglomeration mittels Wasser oder wäßrigen Lösungen, vorzugsweise Salzlösungen wird in einem Wirbelschichtapparat die Wasser und das Agglomerationshilfsmittel enthaltende Flüssigkeit aufgedüst und anschließend getrocknet. Bei einem modifzierten Verfahren wird der vorstehend beschriebene behandelte Röstkaffee über einem rotierenden Teller in einem Turm verteilt, mit Wasser besprüht und anschließend getrocknet.

Bei der Agglomeration mittels einer Mehrstoffdüse wird der Röstkaffee, das Agglomerationshilfsmittel und gegebenenfalls der aromawirksame Stoff mit Dampf, Wasser oder wäßrigen Lösungen obiger Art gemeinsam versprüht. Das dabei entstehende Agglomerat fällt sofort in einen Trockner.

Das erfindungsgemäße Röstkaffeeagglomerat wird vorzugsweise in Form von Aufgußbeuteln verwendet.

Die Erfindung wird im folgenden durch Ausführungsbeispiele näher erläutert. Dort verwendete Prozentzahlen beziehen sich auf Gewichtsprozent.

Für die nachstehenden Beispiele wurde ein mittels Prallmühle oder Kugelmühle feinst gemahlener Röstkaffee mit einer Korngröße von 60 bis 100 μm und einer Restfeuchte von 4 % eingesetzt.

**Beispiel 1**

100 Gew.-Teile Röstkaffeepulver wurden in einem Mischer zum Fluidisieren gebracht. Daraufhin wurde ein hochviskoser, flüssiger Kaffee-Extrakt (entsprechend 30 Gew.-Teilen trockenen Kaffee-Extrakts) mittels Pumpe auf den Röstkaffee gesprüht.

Daraufhin wurde der so behandelte Kaffee in einem Trockenschrank bis auf eine Restfeuchte von 5 % getrocknet.

Eine sensorische Prüfung des Agglomerats zeigte gegenüber dem eingesetzten Röstkaffeepulver keinen Aromaverlust.

**Beispiel 2**

Beispiel 1 wurde wiederholt, wobei anstelle des Kaffee-Extrakts auf 100 Gew.-Teile Röstkaffeepulver eine 2 bis 20 %ige, vorzugsweise 10 %ige wäßrige Gelatinelösung (entsprechend 3 bis 15 Gew.-Teilen, vorzugsweise 6 Gew.-Teilen trockener Gelatine) eingesetzt wird. Daraufhin wurde der so behandelte Röstkaffee bis auf eine Restfeuchte von 5 % getrocknet.

Eine sensorische Prüfung des Agglomerats zeigte gegenüber dem eingesetzten Röstkaffeepulver keinen Aromaverlust.

**Beispiel 3**

In einer Wirbelschicht wurden 100 Gew.-Teile Röstkaffeepulver zunächst mit Sattdampf oberflächenbehandelt. Nach der Trocknung bei 60 bis 80 °C für 8 bis 20 min. wurde auf den Röstkaffee eine Lösung von wäßriger Gelatinelösung (entsprechend 2 Gew.-Teilen trockener Gelatine) aufgesprüht. Daraufhin wurde der so behandelte Röstkaffee bis auf eine Restfeuchte von 5 % getrocknet.

Eine sensorische Prüfung des Agglomerats zeigte gegenüber dem eingesetzten Röstkaffeepulver keinen Aromaverlust.

**Beispiel 4**

Beispiel 3 wurde wiederholt, wobei anstelle der Gelatinelösung auf 100 Gew.-Teile Röstkaffeepulver folgende wäßrige Lösungen von Agglomerationshilfsmitteln verwendet wurden:
- ein flüssiger Kaffee-Extrakt (entsprechend 25 Gew.-Teilen trockenem Kaffee-Extrakt),
- ein flüssiger Kaffee-Extrakt hergestellt aus sprühgetrocknetem Kaffee-Extrakt und Wasser (entsprechend 20 Gew.-Teilen trockenem Kaffee-Extrakt),
- ein flüssiger Kaffee-Extrakt hergestellt aus gefriergetrocknetem Kaffee-Extrakt und Wasser (entsprechend 17 Gew.-Teilen trockenem Kaffee-Extrakt),
- eine Fructoselösung (enthaltend 5 Gew.-Teile Fructose)
- eine Glucoselösung (enthaltend 7 Gew.-Teile Glucose)
- eine Saccharoselösung (enthaltend 20 Gew.-Teile Saccharose)
- eine Stärkelösung (enthaltend 3 Gew.-Teile modifizierte Kartoffelstärke)
- eine Proteinlösung (enthaltend 2 Gew.-Teile Sojaproteine)
- eine 3 %ige Molkeproteinlösung
- eine 3 %ige Süßmolke
- eine 0,3 %ige Carragenatlösung
- eine Alginatlösung (enthaltend 0,4 Gew.-Teile Alginat)
- eine Gelatinelösung (enthaltend 2 Gew.-Teile Gelatine)

Eine sensorische Prüfung der Agglomerate zeigte gegenüber dem eingesetzten Röstkaffeepulver keinen Aromaverlust.

**Anwendungsbeispiel**

Den gemäß Beispielen 1 bis 4 hergestellten Röstkaffeeagglomeraten wurden verschiedene aromawirksame Stoffe zugegeben, wobei folgende Zubereitungen erhalten wurden:

| Rezeptur 1 | |
|---|---|
| Röstkaffeeagglomerat | 40,0 % |
| Milchpulver | 30,0 % |
| Zuckerraffinade | 30,0 % |
| | 100,0 % |

| Rezeptur 2 | |
|---|---|
| Röstkaffeeagglomerat | 30,0 % |
| Milchpulver | 30,0 % |
| Zuckerraffinade | 32,8 % |
| Kakaopulver | 5,0 % |
| Aroma | 2,1 % |
| Salz | 0,1 % |
| | 100,0 % |

| Rezeptur 3 | |
|---|---|
| Röstkaffeeagglomerat | 30,0 % |
| Milchpulver | 30,0 % |
| Zuckerraffinade | 35,9 % |
| Gewürze | 4,0 % |
| Salz | 0,1 % |
| | 100,0 % |

| Rezeptur 4 | |
|---|---|
| Röstkaffeeagglomerat | 60,0 % |
| Zuckerraffinade | 40,0 % |
| | 100,0 % |

| Rezeptur 5 | |
|---|---|
| Röstkaffeeagglomerat | 40,0 % |
| Milchpulver | 60,0 % |
| | 100,0 % |

Außerdem wurden noch weitere Rezepturen im Zusammenhang mit dem erfindungsgemäßen Röstkaffeeagglomerat ausgetestet, die variierende Anteile an Aromen, Milchpulvererzeugnissen, Fruchtpulvern, Pflanzenextrakten, Süßstoffen, Gewürzen und Pflanzendrogen aufwiesen.

**Patentansprüche**

1. Röstkaffeeagglomerat, erhältlich durch Agglomeration von Röstkaffee und wenigstens einem Agglomerationshilfsmittel in Gegenwart eines wasserenthaltenden Mittels und üblicher Hilfsstoffe, wobei der Anteil an wasserfreiem Agglomerationshilfsmittel, bezogen auf 100 Gew.-Teile Röstkaffee 0,1 bis 70

5

Gew.-Teile beträgt.

2. Röstkaffeeagglomerat nach Anspruch 1, dadurch gekennzeichnet, daß der Anteil an wasserfreiem Agglomerationshilfsmittel, bezogen auf 100 Gew.-Teile Röstkaffee, 0,1 bis 70 Gew.-Teile beträgt.

3. Röstkaffeeagglomerat nach den Ansprüchen 1 oder 2, dadurch gekennzeichnet, daß es sich bei dem Agglomerationshilfsmittel um ein Hydrokolloid auf natürlicher Basis, auf chemisch modifizierter Basis bzw. auf synthetischer Basis handelt.

4. Röstkaffeeagglomerat nach vorstehenden Ansprüchen, dadurch gekennzeichnet, daß es sich bei dem Agglomerationshilfsmittel um ein natürliches Hydrokolloid auf Basis von Landpflanzen, Meerespflanzen, aus Mikroorganismen oder auf Proteinbasis, vorzugsweise um ein natürliches Hydrokolloid auf Basis von Landpflanzen oder auf Proteinbasis, handelt.

5. Röstkaffeeagglomerat nach den Ansprüchen 1 bis 4, dadurch gekennzeichnet, daß der Röstkaffee als ganze Bohne, gebrochene Bohne oder als gemahlene Bohne vorliegt.

6. Röstkaffeeagglomerat nach den Ansprüchen 1 bis 5, dadurch gekennzeichnet, daß das Agglomerationshilfsmittel ein löslicher Kaffee-Extrakt oder ein Proteinhydrolysat ist.

7. Röstkaffeeagglomerat nach den Ansprüchen 1 bis 6, dadurch gekennzeichnet, daß als wasserenthaltendes Mittel während der Agglomeration Wasserdampf, Wasser oder eine wäßrige Lösung eingesetzt wird.

8. Röstkaffeeagglomerat nach den Ansprüchen 1 bis 7, dadurch gekennzeichnet, daß dieses weiterhin wenigstens einen aromawirksamen Stoff enthält.

9. Röstkaffeeagglomerat nach Anspruch 8, dadurch gekennzeichnet, daß der aromawirksame Stoff ein Süßstoff, eine Droge, ein Gewürz, ein Pflanzenextrakt, eine Milchpulverzubereitung, ein Fruchtpulver, Kakaopulver oder ein natürlicher, ein naturidentischer und synthetischer Aromastoff ist.

10. Röstkaffeeagglomerat nach Anspruch 9, dadurch gekennzeichnet, daß der Aromastoff ein etherisches Öl oder eine Riechstoffverbindung ist.

11. Verfahren zur Herstellung von Röstkaffeeagglomerat, dadurch gekennzeichnet, daß 100 Gew.-Teile Röstkaffee zusammen 0,1 bis 70 Gew.-Teilen Agglomerationshilfsmittel
    - zunächst in Gegenwart eines wasserenthaltenden Mittels mikroverkapselt,
    - dann einer Aufbauagglomeration und
    - schließlich einer Trocknung
    unterzogen werden.

12. Verfahren nach Anspruch 11, dadurch gekennzeichnet, daß wenigstens ein aromawirksamer Stoff im ersten und/oder im zweiten Verfahrensschritt zugeführt wird.

13. Verfahren nach Anspruch 11, dadurch gekennzeichnet, daß der Röstkaffee als ganze, gebrochene oder gemahlene Bohne, vorzugsweise als gebrochene oder gemahlene Bohne eingesetzt wird.

14. Verfahren nach Anspruch 11, dadurch gekennzeichnet, daß das wasserenthaltende Mittel Wasserdampf, eine wasserhaltige Flüssigkeit, vorzugsweise eine Salzlösung, oder Wasser ist.

15. Verfahren nach Anspruch 11 oder 12, dadurch gekennzeichnet, daß der erste und zweite Verfahrensschritt gleichzeitig durchgeführt werden.

16. Verfahren nach Anspruch 11 oder 12, dadurch gekennzeichnet, daß die Agglomeration mittels Wasserdampf, mittels einer wasserenthaltenden Flüssigkeit oder mittels einer Kombination beider Mittel durchgeführt wird.

EP 0 671 125 A1

**17.** Verfahren nach Anspruch 11 oder 12, dadurch gekennzeichnet, daß die Agglomeration mittels einer Mehrstoffdüse durchgeführt wird, durch die Wasserdampf, Wasser und eine wasserenthaltende Flüssigkeit, vorzugsweise eine Salzlösung gemeinsam aufgebracht werden.

**18.** Aufgußbeutel, enthaltend einen Röstkaffee nach den Ansprüchen 1 bis 10 oder hergestellt nach den Ansprüchen 11 bis 17.

**19.** Verwendung des Röstkaffees nach den Ansprüchen 1 bis 10 oder hergestellt nach den Ansprüchen 11 bis 17 in Aufgußbeuteln, insbesondere in Papierfilteraufgußbeuteln.

Europäisches Patentamt

**EUROPÄISCHER RECHERCHENBERICHT**

Nummer der Anmeldung

EP 95 10 3113

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-3 713 842 (T. LUBSEN ET AL.) <br><br> * Ansprüche 1-12; Beispiel * <br> --- | 1,2,5,6, 11,13-16 | A23F5/12 |
| X | DE-A-28 11 353 (EDELFETTWERKE WERNER SCHLÜTER) <br><br><br> * Seite 10-12; Ansprüche 1-7 * <br> --- | 1,2,5-7, 11, 13-16, 18,19 | |
| X | DE-A-649 630 (R. SEELIG) <br><br> * das ganze Dokument * <br> --- | 1-5,7-9, 11-19 | |
| X | GB-A-742 150 (LES GOURMETS S.A.) <br><br> * Ansprüche 1-4 * <br> --- | 1-5,7, 11,13-16 | |
| X | FR-A-2 662 585 (SERVCO) <br><br> * Ansprüche 1-10 * <br> --- | 1-5,7, 11,13-16 | **RECHERCHIERTE SACHGEBIETE (Int.Cl.6)** |
| X | US-A-1 762 690 (J. KOPF) <br><br> * Seite 1, Zeile 89 - Zeile 92; Ansprüche 1-5 * <br> --- | 1-6,11, 13-16 | A23F |
| X | GB-A-376 588 (G. PFISTER ET AL.) <br><br> * das ganze Dokument * <br> ----- | 1-9, 11-16 | |

Der vorliegende Recherchenbericht wurde für alle Patentansprüche erstellt

| Recherchenort | Abschlußdatum der Recherche | Prüfer |
|---|---|---|
| DEN HAAG | 1.Juni 1995 | Desmedt, G |